# EUROPEAN PATENT APPLICATION

(11) **EP 0 919 132 A2**
(43) Date of publication of application: **02.06.1999**
(21) Application number: 98500081.9
(22) Date of filing: 31.03.1998
(51) Int. Cl.: A23C 1/00, A23C 9/12, A23C 19/032

(54) **Procedure for the production of milk and milk derivatives free of lactose**

(30) Priority: 15.04.1997 ES 9700847
(71) Applicant: Plumley, Kevin More, 36203 Vigo (Pontevedra) (ES)
(72) Inventor: Plumley, Kevin More, 36203 Vigo (Pontevedra) (ES)

(57) **Abstract**

The division of lactose in milk lay a lactase in a production line provides proxy partial pre-digestion in an inanimate substitute stomach for those unable to produce lactase for themselves, most specifically for those who discharge 5-HT on their ingestion of lactose and suffer migraine as a result. Therefore this procedure, such a production line, the physical pre-digestion produced by such means in such a line and the inclusion of such materials so produced in such foods for such purpose all combine - in preventing the discharge of 5-HT, and so removing an essential element in the migraine syndrome - to annul the conditions that otherwise lead to migraine in those disposed to discharge 5-HT when they ingest lactose.

## Description

This invention of **procedure involving partial pre-digestion in a production line for the production of milk and milk derivatives free of lactose to avoid the discharge of 5-Hydroxy-triptamine - or 5-HT -** refers to the production of foods, milk, drinks and sweeteners free of lactose, such production by means of procedure involving partial pre-digestion in a production line, which performs the function of an artificial stomach, in that milk or milk products are introduced to the production line at one or more points, the enzyme lactase is admitted at another point, and the lactase partially pre-digests the lactose in the milk or milk products, separating it into its components of glucose and galactose in the natural process of hydrolysis as in a natural stomach and intestine before digestion. The foods, drinks and sweeteners, be they simple or compound, but thus free of lactose are removed from further point or points in the line. In this way, both lactase and its beneficial effect in the division of lactose, are supplied for those who cannot provide them for themselves.

The underlying objective of this patent application is to seek protection for the production of foods, milk, drinks and sweeteners to be used in foods, drinks and medicines, in such a way that the said products - either containing all the components of milk or not - do not cause the discharge of 5-Hydroxy-triptamine - or 5-HT - particularly in consumers predisposed by their incapacity to produce lactase and so to digest lactose, or milk sugar, to discharge 5-HT and suffer migraine attacks as a result - which association previously has not been generally appreciated. Milk, and so, lactose, is an artificial diet for adults according to nature, but modern industry dictates the use of milk sugar in many processed foods, so it is proposed to provide this partial pre-digestion in this way to aid those who naturally react adversely to the artificial inclusion of lactose in the modern diet.

It is intended to achieve the said production by the inclusion of lactose, but with its physical division into its component glucose and galactose before or during the process of production by means of its treatment with lactase; therefore, in this case, the specific objective of this application is to seek protection for procedure which utilises a production line to produce the said foodstuffs for the said purpose, in which: a) raw milk or milk products which contain lactose, and b) lactase, are introduced at particular points in the production line, the lactase partially pre-digests the lactose, dividing it into its constituent glucose and galactose, and food, drink and sweetener products, either simple or compound but now all innocuous to those who otherwise would be allergic to them, are received at other point or points in the same production line. Alternatively the milk or milk products with lactose separated by means of the said process in such a line may be transferred for their inclusion in compound food or drinks which may be made in separate production lines.

### PRECEDENTS OF THE INVENTION

Whereas it is known that food products which are "free of dairy products" are available in America, and therefore that they may have production lines or means of production by which are produced foods without milk, these are for consumers with generalised "dairy products" intolerance, rather than for those who specifically discharge 5-HT when they ingest lactose and suffer migraine attacks as a result. At present milk, foods, drinks and sweeteners - either with or without all the components of milk - are not produced with the specific objective of avoiding the discharge of 5-HT, and as these are produced by the present invention, protection is also sought for those products which are the sole object of the present production line's function.

The difference in the present invention is that whereas other producers may produce foods and drinks "free of dairy products" for those with generalised "dairy products" intolerance, the proposed production line will produce foods of all types - with or without all the components of milk, but - because the lactose is partially pre-digested as in a natural stomach - without risk of migraine for those who otherwise would discharge 5-HT on their ingestion of lactose, and who - without this proposed production - have at present only the options of the periodic miseries of migraine or a restricted and inadequate diet

In effect, by the division of lactose in such a production line, what is invented here is a means of proxy partial pre-digestion in an inanimate substitute stomach for those unable to ingest lactose without problems, most specifically for those who discharge 5-HT and suffer migraine as a result Therefore it is for this physical pre-digestion by means of such a production line and - by the inclusion of such materials thus produced in such foods for such purpose - for the foods products so produced, that protection is also sought.

### DESCRIPTION OF THE INVENTION

The production line may take the form of a continuous and connected series of tubes in an automatic process, in a series of interlinked containers, or in a series of separate tanks associated only by the transference of material from one to another in the process of the formation of these products

The raw materials of milk or milk products are introduced into the production line at a point or points and the lactase is admitted at another point. The lactase naturally separates the lactose in the milk or milk products into its constituent glucose and galactose as in a natural stomach and intestine, and the matrix material thus pre-digested is then passed either for extraction at another point in the line for use as food inoffensive to those otherwise susceptible to the discharge of 5-HT when they ingest active lactose, or for inclusion in such foods compounded in further stages of the same or other lines.

In the production line of cheese, for example, the lactase may be introduced into a single tank of milk in quantity sufficient to separate the lactose completely into its component glucose and galactose immediately before adding the rennet or 'starter' to commence the formation of curd. The lactase may be added either manually into the upper surface of the milk and be thoroughly stirred in, or via the side of the tank by means of injection and circulation by rotation of a two-way fan, which draws milk from the container, mixes it thoroughly with the lactase, which enters via a calibrated measuring tube, and returns it throughout the bulk of the liquid in the tank. In all cases, however, continual testing is carried out for the presence of any residual untreated lactose before proceeding to form the final product.

Enzymes are naturally temperature-sensitive, and, as in nature, should be used as near to blood-heat as possible, in a concentration compatible with the lactose percentage, which, though normally about 4%, will obviously vary according to the varying proportions of the other contents of the milk, and as butterfat even in bovine milk can vary from a legal 3% in Holstein even to 8% or more in such breeds as Jersey or Guernsey, let alone in species so different as sheep or goats, and let alone the variety of milk products to be used as raw materials, then - as our responsibility is to migraine sufferers - it is thought more proper to prescribe "a quantity and concentration of lactase compatible with producing always a complete separation of all the lactose present, as controlled by rigorous and continous testing", rather than an arbitrary stipulation to satisfy a piece of paper or norm. The conditions of production are, of course, to be completely in keeping with those necessary for the production of other medical products to ensure the health and wellbeing of their consumers.

The enzyme lastase, added here for those who cannot produce it naturally for themselves, hydrolises the lactose thus, (the sugar isomers separating automatically):

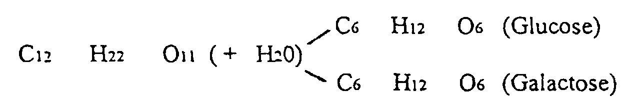

In the case of the mixing of the milk or milk products with other materials to form the said compound products such as dough for biscuits or pizzas, the mixing of lactase with the milk or milk products to separate the lactose into its component glucose and galactose may ideally be completed in a sub-phase, as is previously mentioned, with the thus-treated lactose-free and therefore innocuous milk then passed to be mixed with the flour and other ingredients in the normal way.

However, a continuous process, within a single line, can enable the milk to be introduced, followed by the lactase which separates the lactose in the milk into its component glucose and galactose, and this now lactose-free liquid passes to the mixing section in the same line where the other ingredients appropriate to each required product are introduced, which final material is then extracted at its particular point in the production line.

Whether the lactose separation treatment is carried out in tanks or in automated units, each batch of production is rigorously tested for any existing

When the automatic flow treatment of the milk is in use, an automatic regulator will control the addition of lactase, with a continual test which, if detecting the presence of active lactose, will close a shunt-valve to divert the material present in the circuit either into a tank or into a loop for further treatment until the absence of active lactose is assured. Scrupulous attention to detail will eliminate the presence of all untreated lactose, which is the objective of the entire production process.

Safe foods produced in this way, apart from milk for immediate consumption or stabilised for later consumption or for drying include: all types of cheese, chocolate, yoghurt, ice cream, caramel dessert, biscuits, cakes and pastries, bread, soup powders, processed meats - in fact all foods and drinks in which, at present, lactose is added as milk or as a sweetener - besides the sweetening components of lactose themselves in their divided forms of glucose and galactose, for inclusion in such food and medicinal products that may be appropriate for those who otherwise would discharge 5-HT and suffer migraine as a consequence.

(In case such a production line for this purpose of pre-digestion has already been invented, or in case it is not considered invention enough, as an integral part of the production line would be incorporated if necessary a mechanism of original design or function by which the originality of the line may be established - for example the mentioned use of a two-way fan to mix the lactase with the milk.)

## Claims

1. Procedure involving partial pre-digestion in a production line for the production of milk and milk derivatives free of lactose to avoid the discharge of 5-Hydroxy-triptamine - or 5-HT - is characterised principally by the introduction of milk or milk products as raw materials at a particular point or points in a production line, at a second point lactase is added, which naturally acts on the lactose in the milk or milk products, dividing it by hydrolysis into its component glucose and galactose as in a natural stomach and intestine, and foods and milk products - either containing all the components of milk or not, but free of risk to those who otherwise discharge 5-HT after ingesting lactose - are removed from further points in the production line.

2. Procedure involving partial pre-digestion in a production line for the production of milk and milk derivatives free of lactose to avoid the discharge of 5-Hydroxy-triptamine as claimed in claim 1, is characterised by the fact that the said introduction of the milk or milk products as raw materials and the separation of the lactose it or they contain is carried out in the production line previous to the production process to form the final lactose-free product.

3. Procedure involving partial pre-digestion in a production line for the production of milk and milk derivatives free of lactose to avoid the discharge of 5-Hydroxy-triptamine as claimed in claim 1, is characterised by the fact that the said introduction of the milk or milk products as raw materials and the separation of the lactose it or they contain is carried out in the production line during the production process to form the final lactose-free products.

4. Procedure involving partial pre-digestion in a production line for the production of milk and milk derivatives free of lactose to avoid the discharge of 5-Hydroxy-triptamine as claimed in claims 1 to 3, is characterised by the fact that both glucose and galactose separated from the lactose are used in the foods, drinks and sweeteners produced during or after the separation of the lactose.

5. Procedure involving partial pre-digestion in a production line for the production of milk and milk derivatives free of lactose to avoid the discharge of 5-Hydroxy-triptamine - or 5-HT - as claimed in claims 1 to 4, is characterised by the fact that the lactase is introduced into the milk or milk products bulk or flow by means of the rotation of a two-way fan which draws milk or milk products from the main bulk or flow of milk or milk products, mixes it completely with the lactase which is introduced into the fan compartment via a calibrated measuring tube, and returns the combined liquid throughout the principal mass or flow of milk or milk products.

6. Procedure involving partial pre-digestion in a production line for the production of milk and milk derivatives free of lactose to avoid the discharge of 5-Hydroxy-triptamine - or 5-HT - as claimed in claims 1 to 5, is characterised by the fact that the lactose divided in such a production line is then included in the pre-digested form of glucose and galactose in food products in the same, extended or other production lines, thus producing reaction-free foods of all kinds which do not provoke such allergies that otherwise would occur.
